(19) Europäisches Patentamt
European Patent Office
Office européen des brevets

(11) EP 2 047 801 A1

(12) EUROPEAN PATENT APPLICATION
published in accordance with Art. 153(4) EPC

(43) Date of publication:
15.04.2009 Bulletin 2009/16

(51) Int Cl.:
*A61B 8/00* (2006.01)

(21) Application number: 07767165.9

(22) Date of filing: 19.06.2007

(86) International application number:
PCT/JP2007/062291

(87) International publication number:
WO 2008/010375 (24.01.2008 Gazette 2008/04)

(84) Designated Contracting States:
AT BE BG CH CY CZ DE DK EE ES FI FR GB GR
HU IE IS IT LI LT LU LV MC MT NL PL PT RO SE
SI SK TR
Designated Extension States:
AL BA HR MK RS

(30) Priority: 20.07.2006 JP 2006197564

(71) Applicant: HITACHI MEDICAL CORPORATION
Tokyo 101-0021 (JP)

(72) Inventors:
• AZUMA, Takashi
Tokyo 185-8601 (JP)
• MASUI, Hironari
Tokyo 185-8601 (JP)
• UMEMURA, Shin-ichiro
Tokyo 185-8601 (JP)

(74) Representative: Beetz & Partner
Patentanwälte
Steinsdorfstrasse 10
80538 München (DE)

(54) **ULTRASONOGRAPHIC DEVICE**

(57) Non-linear processing is performed in which noise reduction (smoothing) is serially performed for original data to reduce high-frequency noise components, the edge enhancement processing is performed for the smoothed image and, after that, noise components are reduced again. Finally, the created image is weighted-combined with the original image.

FIG. 3

EP 2 047 801 A1

**Description**

INCORPORATION BY REFERENCE

The present application claims priority from Japanese patent application JP2006-1975645 filed on July 20, 2006 the content of which is hereby incorporated by reference into this application.

TECHNICAL FIELD

The present invention relates to a technology related to an ultrasonic imaging method and an ultrasonic imaging device for ultrasound-based in vivo imaging.

BACKGROUND ART

An ultrasonic imaging device (B mode) used for medical diagnosis transmits ultrasounds to a living body and receives echo signals reflected from parts of the living body in which the acoustic impedance varies spatially and, based on the time difference between the transmission and the reception, estimates the position of the reflection source and converts the echo signal intensity to the brightness for imaging. It is known that specific artifacts (virtual images), called speckles, are generated in a two-dimensional ultrasonic image, and the effect of speckles must be reduced to improve the image quality. However, because speckle patterns include the characteristics useful for diagnosing the density of biomedical tissues, it is desirable that non-speckle artifacts be removed and that the speckles be displayed to such a level that the diagnostician (operator) can view them easily.

One conventional method for minimizing speckles is to create the texture smoothed image and the structure enhancement image of a biomedical tissue and to weigh and combine those two types of image data as described, for example, in <Patent Document 1>. Because the speckle distribution follows the Rayleigh probability density, the texture smoothed image is generated by applying the similarity filter that performs the weighted average processing based on the statistical similarity. The structure enhancement image is created using a high pass filter such as a differential filter.

A method for reducing noises without deteriorating the edge resolution is that, with the difference between the smoothed image and the original image as a high-frequency image, dynamic range compression is performed for the high-frequency image which is then added to the smoothed image or the original image, as described, for example, in <Patent Document 2>.

Another method for reducing noises while enhancing the edge is to create a sharpness enhancement image, a smoothed image, and an edge detection image, to calculate noise data produced by removing the edge component from those images, and to subtract the noise data from the sharpness enhancement image for generating a combined image.

Patent Document 1: JP-A-2004-129773
Patent Document 2: JP-A-2000-163570

DISCLOSURE OF THE INVENTION

In the background art described above, the following problems remain unsolved. In the method exemplified in <Patent Document 1>, the noise components enhanced by the structure enhancement processing cannot be fully reduced by simply performing the weighted addition linear processing. In the method exemplified in <Patent Document 2>, the noises are reduced but the edge enhancement effect cannot be achieved. Another problem with the method for reducing noises while enhancing the edge is that, when the edge is detected as noises as a result of false detection, the edge component is deteriorated significantly and information derived from speckle patterns is lost.

In the present invention, high-frequency noise components are reduced from data obtained by ultrasound irradiation, the edge enhancement processing is performed for the noise-reduced data, and high-frequency noise components are further reduced from the edge-enhanced data to generate image data. This image data and the original data are added up to produce a combined image.

For example, non-linear processing is serially performed in which the smoothing processing is performed for original data to reduce high-frequency noise components, the edge enhancement processing is performed for the smoothed image and, after that, noise components are reduced again. Finally, the created composed image is weighted-combined with the original image.

According to the present invention, serially performing the non-linear processing makes the edge enhancement effect and the noise reduction effect compatible with each other and the combining the composed image with the original image allows information, which has information on speckle patterns, to be retained.

Other objects, features and advantages of the present invention will become apparent from the following description of the embodiment of the present invention taken in conjunction with the accompanying drawings.

BEST MODE FOR CARRYING OUT THE INVENTION

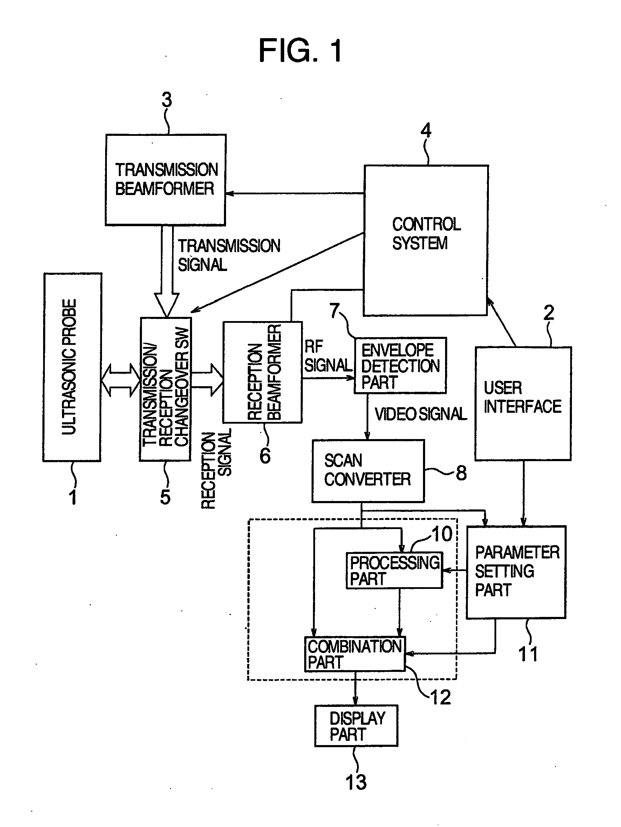

FIG. 1 shows an example of the system configuration of an ultrasonic image processing method. An ultrasonic probe 1, in which one-dimensional ultrasonic elements are arranged, transmits an ultrasonic beam (ultrasonic pulse) to a living body and receives the echo signal (reception signal) reflected from the living body. Under control of a control system 4, the transmission signal that has a delay time corresponding to the transmitter focus is output by a transmission beamformer 3 and, via a transmission/reception changeover switch 5, sent to the ultrasonic probe 1. The ultrasonic beam, which is reflected or scattered in the living body and is returned to the ultrasonic probe 1, is converted to an electrical signal by the ultrasonic probe 1 and is sent to a reception beamformer 6 via the transmission/reception changeover switch 5 as the reception signal. The reception beamformer 6, a complex beamformer that mixes the two reception signals 90 degree out of phase, performs the dynamic focus for adjusting the delay time according to the reception time under control of the control system 4 and outputs the RF signal of the real part and the imaginary part. This RF signal is detected by an envelope detection part 7, converted to the video signal, and input to a scan converter 8 for conversion to image data (B mode image data). At this time, the image data (original image), which is output from the scan converter 8 and is obtained based on the ultrasonic signal from the tested body, is sent to a processing part 10 where the signal processing is performed to process the image data into an image from which noises are reduced and whose edge is enhanced. The processed image is weighted-combined with the original image by a combination part 12 and is sent to a display part 13 for display thereon. A parameter setting part 11 is a part where the parameters to be used for the signal processing in the processing part and a combination ratio to be used in the combination part are set. Those parameters are entered by the operator (diagnostician) from a user interface 2. The user interface 2 has an input control that allows the user to assign priority to one of two images, the processed image and the original image, according to the object to be diagnosed (structure of blood clot outline in the blood vessel, texture pattern indicating the stage of liver cirrhosis, both structure and texture pattern of a tumor tissue in an organ, etc.). Two types of image data, processed image and combined image, are displayed side by side on the display and, when the operator operates the input control (ratio input means) for setting a combination ratio, the corresponding combined image is updated and displayed. On the other hand, when the operator operates the input control for setting the noise reduction parameters or the edge enhancement processing parameters, the display of the corresponding processed image is updated and, at the same time, the combined image created by combining the processed image is updated in a synchronized manner and displayed.

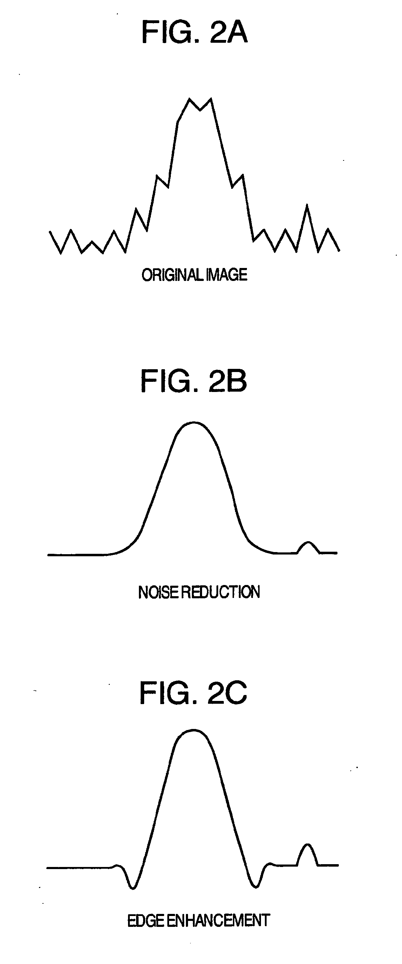

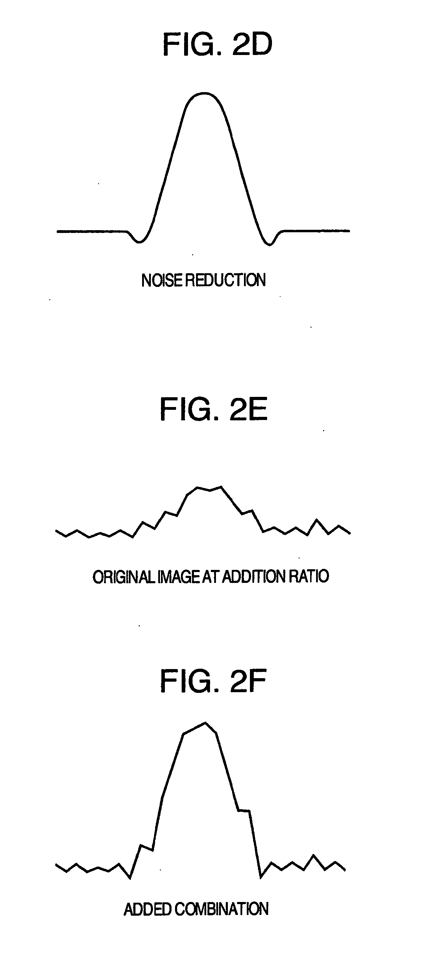

FIGS. 2A-2F show examples of the processing of the ultrasonic image processing method in the processing part 10 and the combination part 12. First, the noise reduction processing is performed for the original image (FIG. 2A) to produce a noise reduced image (FIG. 2B). Next, to increase the visibility of the structure, the edge enhancement processing is performed to produce an edge enhanced image (FIG. 2C). At this time, because the noise components still included in the noise reduced image (FIG. 2B) are enhanced, the noise reduction processing is applied again to convert the image to a noise reduced image (FIG. 2D). Because this noise reduced image (FIG. 2D) has lost the speckle pattern information on the original image, this image is combined (addition or multiplication) with the original image last at an appropriate ratio to produce a combined image (FIG. 2F). FIG. 2E shows an original image processed at the appropriate addition ratio. Note that the noise reduction processing may be the smoothing processing. It is known that, as described in <Patent Document 1>, the probability density function of the speckle noises, generated in a two-dimensional ultrasonic image, follows the Rayleigh distribution. As compared with the Gaussian distribution type noises that are common electrical noises, the Rayleigh distribution has the characteristics in which specifically large noise components occur though less frequently. This means that it is difficult to completely reduce noises by the noise reduction processing performed only once, with the result that the partially remaining noise components are enhanced during the enhancement processing. It is therefore efficient to apply the noise reduction processing again. In addition, because the speckle patterns include information useful for the diagnosis such as the density of the living body tissues, the combination processing should be performed in such a way that the speckle patterns are not erased completely but their dynamic ranges are finally reduced to an easy to view level.

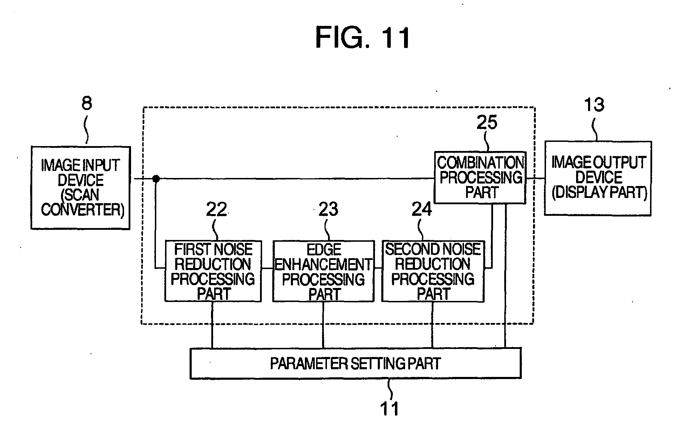

FIG. 11 shows the functional blocks for executing the example of the processing in FIGS. 2A-2F. The original image is entered from an image input device (8) and is processed by a first noise reduction processing part (22), an edge enhancement processing part (23), and a second noise reduction processing part (24) in this order. The processed image is combined with the original image by a combination processing part (25) and is displayed on an image output device (13). The parameters used for the processing parts are set by an operator via a parameter setting part (11).

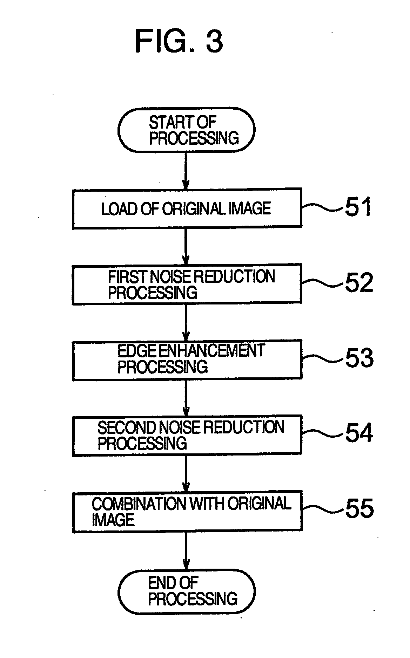

FIG. 3 shows the processing procedure for the ultrasonic image processing method. First, the original image is loaded (step 51) and, next, the first noise reduction processing is performed (step 52). As the filter for the noise reduction processing, a similarity filter, a weighted average filter, a directional adaptive filter, or a morphology filter is used. The similarity filter is, for example, the filter described in <Patent Document 1>. The weighted average filter, the most popular filter, is a filter that performs the moving average processing with a fixed load value specified in the load range. The weighted average filter, though inferior in the edge structure retaining ability, performs the processing speedily. The directional adaptive filter, which uses the method disclosed, for example, in JP-A-2001-14461, judges the direction in which the density change in the one-dimensional direction is the minimum in the processing range of the pixels, and performs the smoothing processing in that direction only. The directional adapter filter, though interior in the two-dimensional noise reduction ability, is superior in enhancing the coupling of the structure. The morphology filter, which uses the method disclosed, for example, in <Patent Document 2>, takes longer in the computation than the weighted average filter but is superior in the edge structure retaining ability. The filter to be used should be selected according to the diagnosis purpose (on which the importance should be placed, in-vivo structure or texture pattern, or whether or not the real-time processing is required), or a combination of two or more filters may be used.

After the first noise reduction processing, the edge enhancement processing is performed (step 53). Considering the performance and the computation speed, it is desirable that a spatial differential filter be used for the edge enhancement processing (for example, the second-order differential type described in <Patent Document 1> or the unsharp mask type described in JP-A-2001-285641 in which the sign of the second-order differential type is reversed). The uniform resolution of an ultrasonic image is guaranteed in the beam irradiation direction while, in the case of the fan beam irradiation, the resolution is not uniform in the radial direction. So, the interpolation processing is performed to find an estimated value which includes an error. In this case, by using a filter that has a strong differential effect for the depth direction of the ultrasonic irradiation and that has a weak differential effect for the direction orthogonal to the depth direction, an edge enhanced image which includes fewer errors can be obtained. An actual example is a filter with the load of $[-1\ 3\ -1]^t$ (t represents the transposition) in the depth direction and with the load of $[1\ 1\ 1]$ in the radial direction. The effect of this filter is that the depth direction corresponds to the second-order differential and that the radial direction corresponds to the simple average processing. Note that the filter values and the filter lengths are not limited to the values of this example but may be adjusted according to the object.

In addition, the second noise reduction processing is performed for the edge enhanced image (step 54). A filter similar to the smoothing filter may be used as the processing filter. Finally, the noise reduced image and the original image are combined through addition calculation or multiplication calculation at an appropriate ratio to produce a combined image (step 55).

The following describes how to decide an appropriate combination ratio using a calibration image. The calibration image should be created in advance using the compounded imaging method if possible (different frequencies and irradiation angles are used to produce multiple ultrasonic images and, by combining those images, the noise components can be reduced while retaining edge components). The brightness Rij of the reference image is calculated by subtracting the brightness Oij of the original image, multiplied by the fixed value of a, from Tij, where the calibration image is the brightness of Tij. i and j represent the pixel numbers in the Cartesian coordinate system.

[Expression 1]

$$R_{ij} = T_{ij} - a \times O_{ij} \quad \cdots\cdots\quad (1)$$

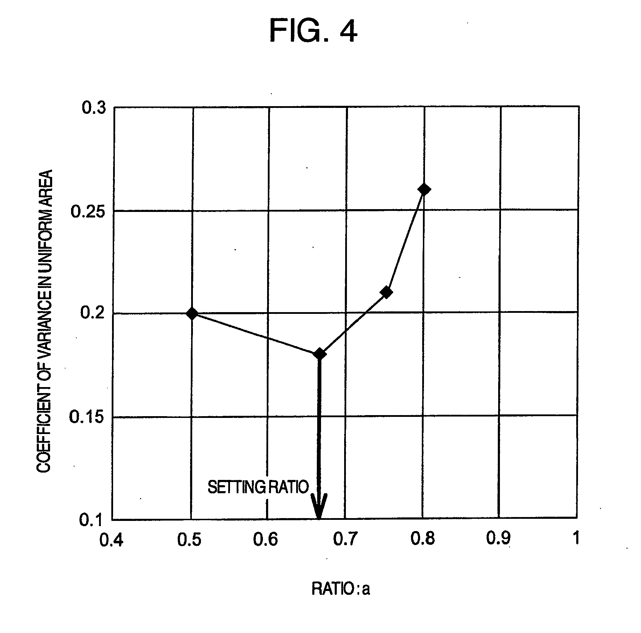

When the reference image Rij is assumed to be the target of the noise reduced image shown in FIG. 2D, it is desirable for a uniform area in Rij, where only speckle patterns are present, to have the image quality in which as many noises as possible are reduced. So, the noise reduction level is quantitatively represented by the coefficient of variance that is the value obtained by calculating the standard deviation and the average of the pixel brightness distribution in the uniform area and by dividing the standard deviation by the average. The smaller the coefficient of variance is, the fewer the noises are and the smoother the image quality is. FIG. 4 shows an example of change in the coefficient of variance for the ratio a. In this example, a=0.67 where the coefficient of variance is the minimum is the best ratio.

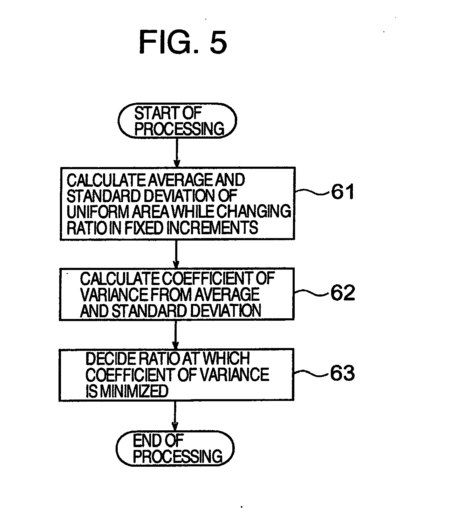

FIG. 5 shows the processing procedure for setting the combination ratio. First, the combination ratio is changed in fixed increments, and the average and the standard deviation of the uniform area are calculated (step 61). Next, the coefficient of variance is calculated from the calculated average and the standard deviation (step 62). Considering the correspondence between the ratio and the coefficient of variance, the ratio at which the coefficient of variance is minimized is decided as the ratio to be used for the combination processing (step 63).

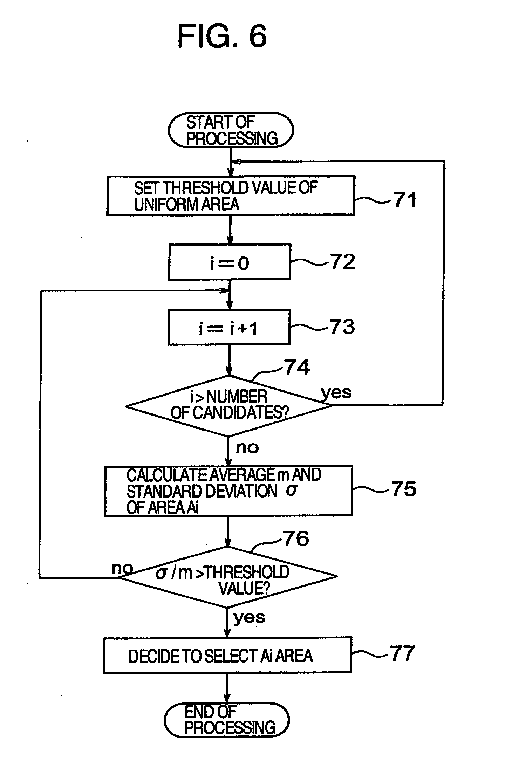

FIG. 6 shows the procedure for extracting a uniform area. The object image is subdivided into candidate areas Ai in advance, where i indicates the number of a subdivided candidate. If a candidate small area is not uniform but includes different structures, the standard deviation of the brightness distribution is increased and the coefficient of variance is increased. That is, if the coefficient of variance is equal to or higher than a predetermined value, it is judged that the area is not a uniform area. So, in the first processing, the threshold value of a uniform area is set (step 71). Next, beginning with the value of 1 as the candidate area number i (steps 72 and 73), the judgment processing is repeated at least until i exceeds the total number of candidates. If the uniform area is not decided even when i becomes equal to the total number of candidates, the threshold value of the uniform area is reset and the processing is repeated (step 74). While i is smaller than the number of candidates, the judgment is made in such a way that the average m and the standard deviation $\sigma$ of the area Ai are calculated (step 75) and the relation between the coefficient of variance $\sigma/m$ and the threshold value is checked (step 76). If the threshold value is larger than $\sigma/m$, it is judged that the area is not a uniform area and the candidate is changed to the next (i+1)th candidate to repeat the processing; if the threshold value is smaller than $\sigma/m$, the area Ai is selected and decided as a uniform area and the processing is terminated (step 77).

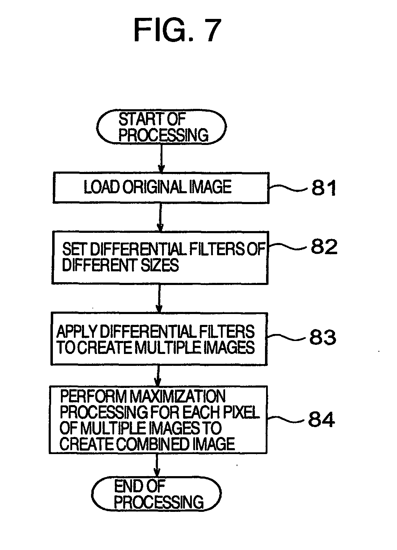

Next, FIG. 7 shows the processing procedure of the edge enhancement processing part shown in FIG. 3. In this processing procedure, the image after the first noise reduction processing in FIG. 3 is loaded as the original image of the edge enhancement processing (step 81). First, multiple differential filters of different sizes (lengths), which are about the size of the structure of an object such as a vessel or a liver in the original image, are set (step 82). The differential filters are applied to the original image to create multiple processing images (step 83). Finally, the maximization processing is performed for the pixels of the multiple images to create a combined image composed of the pixels at the maximum brightness (step 84) and the processing is terminated. Because the size of the structure of an object varies spatially, it is difficult for a fixed-size differential filter to achieve the optimum enhancement. The output results of multiple-size filters can be used for combining the maximum values to give the effect of an adaptive matched filter. Another setting is also possible in which, not the filter sizes, but the filter component values are changed.

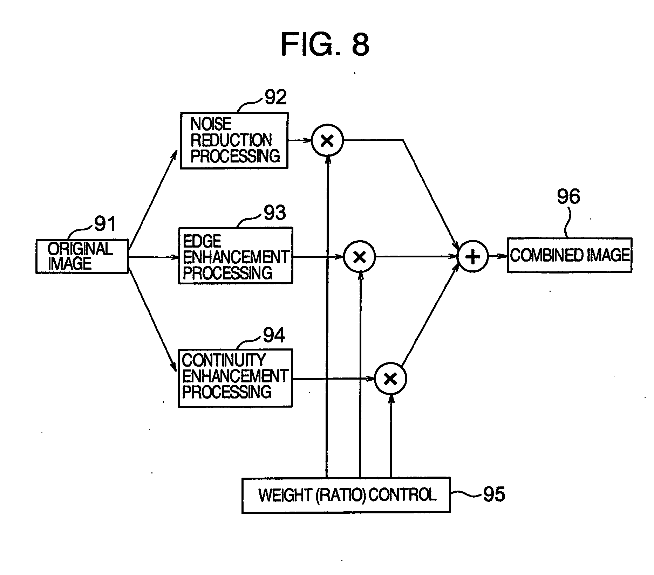

Although the ultrasonic image processing method in FIG. 3 described above is a method in which non-linear processing is serially used, the parallel processing method is also possible. FIG. 8 shows the processing procedure for the parallel processing according to the present invention. The noise reduction processing (92), edge enhancement processing (93), and continuity enhancement processing (94) are applied to the original image (91) separately. In this case, for the mode of the noise reduction processing and the edge enhancement processing, the same processing mode as that of the ultrasonic image processing method in FIG. 3 may be used. Note that the directional adaptive filter used in the noise reduction processing in FIG. 3 is used in parallel especially for the continuity enhancement processing. In this way, the processing corresponding to the three types of characteristics useful for the diagnosis is performed separately, and the processing results are added (or multiplied) at appropriate ratios (95) to produce a combined image (96). Finally, the processing for combining the combined image with the original image is performed in the same way as the processing method in FIG. 3.

The following describes how to set the ratios for combining three types of images during the parallel processing. The difference image, generated by subtracting the original image from the calibration image using the ratios decided by the processing procedure in FIG. 5, is used as the calibration image Cij during the parallel processing. Here, i and j represent the number of a pixel in the Cartesian coordinates, and the image size is M x N. On the other hand, the combined image created during the parallel processing is obtained by assigning the weighting factors c1, c2, and c3 to the noise reduced image Dij, edge enhancement image Eij, and continuity enhancement image Lij, respectively, and adding up the weighted images. In this case, the minimum of the sum of squares of the differences in the pixel brightness between the calibration image Cij and the combined image created during the parallel processing is the best combination of the weighting factors. The cost function g for it is defined by the following expression.

[Expression 2]

$$g = \sum_{i=1}^{M} \sum_{j=1}^{N} \left[ C_{ij} - \left\{ c_1 \times D_{ij} + c_2 \times E_{ij} + c_3 \times L_{ij} \right\} \right]^2 \quad \cdots\cdots \quad (2)$$

where c1, c2, and c3 satisfy the following expression.

[Expression 3]

$$c_1 + c_2 + c_3 = 1 \quad \cdots \cdots \quad (3)$$

g is minimized when the partial differential of the weighting factors is 0, and the following expression is used for c1 and c2. Note that c3 is omitted because c3 is the factor determined by c1 and c2 according to expression (3).

[Expression 4]

$$\frac{\partial g}{\partial c_1} = \frac{\partial g}{\partial c_2} = 0 \quad \cdots \cdots \quad (4)$$

From expression (2) and expression (4), it is derived that c2 and c1 satisfy the relation represented by the following expression.

[Expression 5]

$$c_2 = \frac{\sum_{i=1}^{M}\sum_{j=1}^{N}\{C_{ij} + L_{ij} - c_1(D_{ij} + L_{ij})\}}{\sum_{i=1}^{M}\sum_{j=1}^{N}(E_{ij} + L_{ij})} \quad \cdots \cdots \quad (5)$$

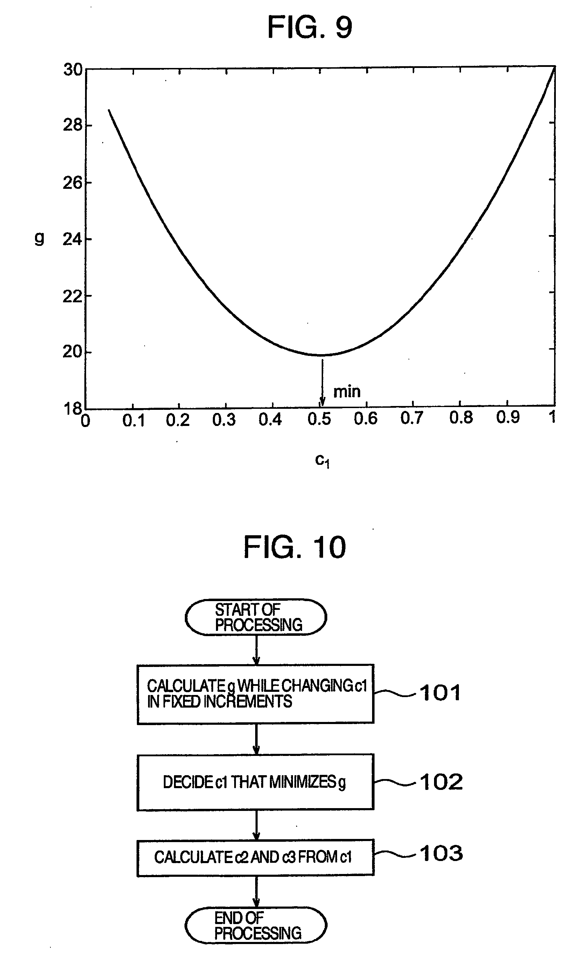

Based on the relation between c1 and c2 in expression (5), FIG. 9 shows an example in which the combination ratios c1 and c2 are set. When the variable on the horizontal axis is c1, c2 is found by substituting c1 in expression (5) and c3 is determined by c2 which is found and expression (3) and, therefore, the cost amount g can be calculated from expression (2) using c1 - c3. And, by finding g as c1 is changed, c1 - c3 that minimize g should be set.

FIG. 10 shows the processing procedure for calculating the combination ratios used in the parallel processing. First, c1 is changed in fixed increments, and the cost amount g is calculated according to the calculation described above (step 101). Next, c1 that minimizes g is determined (step 102). Finally, c2 and c3 are calculated from c1, and the processing is terminated.

It should be further understood by those skilled in the art that though the foregoing description has been made on the embodiment of the present invention, the present invention is not limited thereto and various changes and modifications may be made within the scope of the spirit of the present invention and the appended claims.

INDUSTRIAL APPLICABILITY

The present invention is applicable not only to an ultrasonic image processor but also to the devices in general that perform image processing. The ultrasonic image processor of the present invention reduces noises while enhancing the edge for producing high visibility images.

BRIEF DESCRIPTION OF DRAWINGS

FIG. 1 shows an example of the system configuration of an ultrasonic image processing method of the present invention.
FIG. 2A shows an example of processing of the ultrasonic image processing method of the present invention.
FIG. 2B shows an example of processing of the ultrasonic image processing method of the present invention.
FIG. 2C shows an example of processing of the ultrasonic image processing method of the present invention.
FIG. 2D shows an example of processing of the ultrasonic image processing method of the present invention.
FIG. 2E shows an example of processing of the ultrasonic image processing method of the present invention.
FIG. 2F shows an example of processing of the ultrasonic image processing method of the present invention.
FIG. 3 shows the processing procedure for the ultrasonic image processing method of the present invention.
FIG. 4 shows an example of the combination ratio setting of the present invention.
FIG. 5 shows the processing procedure for the combination ratio setting of the present invention.
FIG. 6 shows the processing procedure for the uniform area extraction of the present invention.
FIG. 7 shows the processing procedure of the edge enhancement processing of the present invention.
FIG. 8 shows the processing procedure for the parallel processing of the present invention.
FIG. 9 shows an example of the combination ratio setting in the parallel processing of the present invention.
FIG. 10 shows the processing procedure for calculating the combination ratios in the parallel processing of the present invention.
FIG. 11 shows the functional blocks of the ultrasonic image processing method of the present invention.

## Claims

1. An ultrasonic image processor comprising:

    irradiation means that irradiates ultrasound to a tested body;
    detection means that detects an ultrasonic signal from the tested body;
    first processing means that creates first image data based on a detection result of said detection means;
    second processing means that reduces noise components from the first image data to create second image data;
    third processing means that performs edge enhancement processing for the second image data to create third image data;
    fourth processing means that reduces noise components from the third image data to create fourth image data; and
    fifth processing means that performs addition processing or multiplication processing for the first image data and the fourth image data.

2. The ultrasonic image processor according to claim 1 wherein
   said fifth processing means assigns weights to, and performs addition or multiplication for, the first image data and the fourth image data to create fifth image data.

3. The ultrasonic image processor according to claim 1 wherein
   said fourth processing means reduces noise components enhanced by said third processing means.

4. The ultrasonic image processor according to claim 2 wherein
   said fifth processing means creates a calibration image and sets a noise area in the calibration image,
   calculates a standard deviation and an average of a brightness distribution in the noise area and divides the standard deviation by the average to calculate a coefficient of variance at a ratio of the weights, and
   calculates a ratio that minimizes the coefficient of variance to assign weights using the ratio.

5. The ultrasonic image processor according to claim 1 wherein
   said second processing means and/or said fourth processing means has at least one of a similarity filter, a weighted average filter, a directional adaptive filter, and a morphology filter.

6. The ultrasonic image processor according to claim 1 wherein
   said third processing means applies differential filters, which have different filter lengths or different filter component values, to the second image data to create multiple pieces of image data, performs maximization processing for pixel positions of the multiple pieces of image data, and creates a combined image, composed of pixel data at a maximum value brightness, as the third image data.

7. The ultrasonic image processor according to claim 1 wherein
said third processing means applies a differential filter to the second image data, said differential filter having a strong differential effect for a depth direction in which the ultrasonic sound is irradiated, said differential filter having a weak differential effect for a direction orthogonal to the depth direction.

8. An ultrasonic image processor comprising:

   irradiation means that irradiates ultrasound to a tested body;
   detection means that detects an ultrasonic signal from the tested body;
   means that creates image data based on a detection result of said detection means;
   means that performs edge enhancement processing, continuity enhancement processing, and noise reduction processing for image data in parallel;
   means that performs weighted combination for three types of images to create a combined image, said three types of images being obtained as a result of the edge enhancement processing, the continuity enhancement processing, and the noise reduction processing; and
   means that performs weighted combination for the combined image and the image data.

9. The ultrasonic image processor according to claim 8 wherein
said means that performs weighted combination
creates a calibration image and creates a plurality of combined images from the three types of images by varying a combination ratio,
calculates a sum of squares of differences in pixel brightness between each of the plurality of combined images and the calibration image, and
finds the combination ratio, which minimizes the sum of squares, for use in weighted combination.

10. The ultrasonic image processor according to claim 2, further comprising a display and ratio input means for receiving the weights wherein
said display displays two pieces of image data, the fourth image data and the fifth image data, side by side and said ratio input means for receiving the weights is used to change a ratio of the weights.

11. The ultrasonic image processor according to claim 10 wherein said display displays the fifth image data created according to the ratio of the weights changed by said ratio input means for receiving the weights.

# FIG. 1

# FIG. 2A

ORIGINAL IMAGE

# FIG. 2B

NOISE REDUCTION

# FIG. 2C

EDGE ENHANCEMENT

# FIG. 2D

NOISE REDUCTION

# FIG. 2E

ORIGINAL IMAGE AT ADDITION RATIO

# FIG. 2F

ADDED COMBINATION

# FIG. 3

```
       ┌─────────────────────┐
       │      START OF        │
       │    PROCESSING        │
       └─────────────────────┘
                  │
                  ▼
    ┌─────────────────────────────┐
    │   LOAD OF ORIGINAL IMAGE     │──── 51
    └─────────────────────────────┘
                  │
                  ▼
    ┌─────────────────────────────┐
    │   FIRST NOISE REDUCTION      │──── 52
    │   PROCESSING                 │
    └─────────────────────────────┘
                  │
                  ▼
    ┌─────────────────────────────┐
    │   EDGE ENHANCEMENT           │──── 53
    │   PROCESSING                 │
    └─────────────────────────────┘
                  │
                  ▼
    ┌─────────────────────────────┐
    │   SECOND NOISE REDUCTION     │──── 54
    │   PROCESSING                 │
    └─────────────────────────────┘
                  │
                  ▼
    ┌─────────────────────────────┐
    │   COMBINATION WITH ORIGINAL  │──── 55
    │   IMAGE                      │
    └─────────────────────────────┘
                  │
                  ▼
       ┌─────────────────────┐
       │      END OF          │
       │    PROCESSING        │
       └─────────────────────┘
```

# FIG. 4

# FIG. 5

START OF
PROCESSING

CALCULATE AVERAGE AND
STANDARD DEVIATION OF
UNIFORM AREA WHILE CHANGING
RATIO IN FIXED INCREMENTS 61

CALCULATE COEFFICIENT OF
VARIANCE FROM AVERAGE
AND STANDARD DEVIATION 62

DECIDE RATIO AT WHICH
COEFFICIENT OF VARIANCE
IS MINIMIZED 63

END OF
PROCESSING

# FIG. 6

```
                    ┌─────────────────┐
                    │    START OF      │
                    │   PROCESSING     │
                    └─────────────────┘
                             │
                             ▼
        ┌──────────────────────────────────┐
        │  SET THRESHOLD VALUE OF          │─── 71
        │  UNIFORM AREA                    │
        └──────────────────────────────────┘
                             │
                             ▼
              ┌──────────────────┐
              │     i = 0        │─── 72
              └──────────────────┘
                             │
                             ▼
              ┌──────────────────┐
              │    i = i+1       │─── 73
              └──────────────────┘
                             │       ── 74
                             ▼
                    ◇──────────────◇
                    │ i > NUMBER   │  yes
                    │OF CANDIDATES?│──────►
                    ◇──────────────◇
                             │ no
                             ▼
        ┌──────────────────────────────────┐
        │  CALCULATE AVERAGE m AND         │
        │  STANDARD DEVIATION σ            │─── 75
        │  OF AREA Ai                      │
        └──────────────────────────────────┘
                             │       ── 76
                             ▼
              no    ◇──────────────────◇
           ◄────────│ σ /m > THRESHOLD │
                    │      VALUE?       │
                    ◇──────────────────◇
                             │ yes
                             ▼
        ┌──────────────────────────────────┐
        │  DECIDE TO SELECT Ai AREA        │─── 77
        └──────────────────────────────────┘
                             │
                             ▼
                    ┌─────────────────┐
                    │     END OF      │
                    │   PROCESSING    │
                    └─────────────────┘
```

# FIG. 7

START OF
PROCESSING

LOAD ORIGINAL IMAGE — 81

SET DIFFERENTIAL FILTERS OF
DIFFERENT SIZES — 82

APPLY DIFFERENTIAL FILTERS
TO CREATE MULTIPLE IMAGES — 83

PERFORM MAXIMIZATION
PROCESSING FOR EACH PIXEL
OF MULTIPLE IMAGES TO — 84
CREATE COMBINED IMAGE

END OF
PROCESSING

# FIG. 8

# FIG. 9

# FIG. 10

EP 2 047 801 A1

# FIG. 11

8

IMAGE INPUT
DEVICE
(SCAN
CONVERTER)

25
COMBINATION
PROCESSING
PART

13
IMAGE OUTPUT
DEVICE
(DISPLAY PART)

22
FIRST NOISE
REDUCTION
PROCESSING
PART

23
EDGE
ENHANCEMENT
PROCESSING
PART

24
SECOND NOISE
REDUCTION
PROCESSING
PART

PARAMETER SETTING PART

11

## INTERNATIONAL SEARCH REPORT

International application No.

PCT/JP2007/062291

A.  CLASSIFICATION OF SUBJECT MATTER
*A61B8/00*(2006.01)i

According to International Patent Classification (IPC) or to both national classification and IPC

B.  FIELDS SEARCHED

Minimum documentation searched (classification system followed by classification symbols)
A61B8/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 11-501841 A  (Acuson Corp.),<br>16 February, 1999 (16.02.99),<br>Page 9, lines 12 to 21; page 12, lines 9 to 18;<br>Fig. 1<br>& US 5479926 A          & WO 1996/028095 A1<br>& DE 19681290 T | 1-11 |
| A | JP 2-280739 A  (N.V. Philips'<br>Gloeilampenfabrieken),<br>16 November, 1990 (16.11.90),<br>Page 3, upper right column, lines 5 to 8;<br>Fig. 1<br>& US 5050226 A          & FR 2644913 A<br>& DE 69014364 C | 1-11 |

| | | |
|---|---|---|
| ☒ Further documents are listed in the continuation of Box C. | ☐ See patent family annex. | |

| | | |
|---|---|---|
| * Special categories of cited documents: | "T" | later document published after the international filing date or priority date and not in conflict with the application but cited to understand the principle or theory underlying the invention |
| "A" document defining the general state of the art which is not considered  to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
|---|---|
| 06 September, 2007 (06.09.07) | 18 September, 2007 (18.09.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

20

**INTERNATIONAL SEARCH REPORT**

| International application No. |
|---|
| PCT/JP2007/062291 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-267584 A  (Aloka Co., Ltd.),<br>30 September, 2004 (30.09.04),<br>Fig. 1<br>(Family: none) | 1-11 |
| A | JP 2004-141514 A  (Toshiba Corp.),<br>20 May, 2004 (20.05.04),<br>Par. Nos. [0036] to [0038]; Figs. 1, 2<br>& US 2004/0081340 A1    & EP 1416443 A1<br>& CN 1493258 A | 1-11 |
| A | Liexiang Fan et al, Nonlinear wavelet<br>filter for intracoronary ultrasound images,<br>Proceedings of Computers in Cardiology,<br>IEEE, 1996.09, pp.41-44 | 1-11 |
| A | JP 7-51270 A  (Hitachi Medical Corp.),<br>28 February, 1995 (28.02.95),<br>Par. Nos. [0015] to [0016]; Fig. 1<br>(Family: none) | 1-11 |

Form PCT/ISA/210 (continuation of second sheet) (April 2005)

**EP 2 047 801 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 20061975645 B
- JP 2004129773 A
- JP 2000163570 A
- JP 2001014461 A
- JP 2001285641 A